(19) Europäisches Patentamt
European Patent Office
Office européen des brevets

(11) **EP 2 784 634 A2**

(12) **EUROPEAN PATENT APPLICATION**

(43) Date of publication:
**01.10.2014   Bulletin 2014/40**

(51) Int Cl.:
*G06F 3/0346* (2013.01)   *G06F 1/16* (2006.01)

(21) Application number: **13198365.2**

(22) Date of filing: **19.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.03.2013   KR 20130032309**

(71) Applicant: **Samsung Electronics Co., Ltd
Gyeonggi-do 443-742 (KR)**

(72) Inventors:
• **Kim, In-ji
   Gyeonggi-do (KR)**
• **Hwang, Je-sun
   Gyeonggi-do (KR)**

(74) Representative: **Brandon, Paul Laurence
   Appleyard Lees
   15 Clare Road
   Halifax, HX1 2HY (GB)**

(54) **Display apparatus and remote control apparatus for controlling the display apparatus**

(57)     A remote control apparatus which controls a display apparatus is provided. The remote control apparatus includes a body having a roly-poly shape, a sensor which senses a motion of the body, and a controller which transmits a signal which corresponds to a sensed result of the sensor and controls operations of the display apparatus. The controller determines a user interaction according to a sensed result of the sensor, and reads from a storage a control command which corresponds to the user interaction and transmits the read control command to the display apparatus. The body has its center of mass in its lower portion and the lower portion is heavier than its upper portion.

# FIG. 4

**Description**

CROSS-REFERENCE TO RELATED APPLICATIONS

This application claims priority from Korean Patent Application No. 10-2013-0032309, filed in the Korean Intellectual Property Office on March 26, 2013, the disclosure of which is incorporated herein by reference, in its entirety.

BACKGROUND

**1. Field**

Methods and apparatuses consistent with the exemplary embodiments relate to a display apparatus and a remote control apparatus for controlling the display apparatus. More particularly, the exemplary embodiments relate to a display apparatus related to a user experience (UX) and a remote control apparatus which controls the display apparatus.

**2. Description of the Prior Art**

A display apparatus is an output apparatus such as television or computer monitor etc., which expresses electrical information as visual information in order to display the electrical information to a user. In addition, smart phones or tablet PCs etc. that are in widespread use may also be a display apparatus. A remote control apparatus refers to a terminal apparatus for controlling a display apparatus from a long distance.
As smart phones, tablet PCs and smart TVs etc. come into wider use, user sentiment based interface (UI) and user experience (UX) are emerging as important elements. Accordingly, there is a need to seek a way to induce a user's sentiment, and further, to expand the user's emotional experience.

SUMMARY

The purpose of the present disclosure is to provide a user sentiment based display apparatus and a remote control apparatus which controls the display apparatus.
According to an exemplary embodiment a remote control apparatus is provided to control a display apparatus, the remote control apparatus comprising a body which has its mass center in its lower portion and thus the lower portion is heavier than its upper portion. As a result, the remote control can immediately stand up by itself; a sensor which senses a motion of the body; and a controller which transmits to the display apparatus a signal which corresponds to a sensed result of the sensor, and controls operations of the display apparatus.
The body may comprise a support; and a main body configured to be attachable to/detachable from the support, and the controller may be configured to operate in a pointing mode of moving a pointer on a screen of the display apparatus according to a motion of the main body in response to the main body being separated from the support, and is configured to control operations of the display apparatus according to the motion of the body in response to the main body being mounted on the support.
The remote control apparatus may further comprise a storage configured to have a control command stored therein, and the controller may be configured to determine a user interaction according to a sensed result of the sensor, and configured to read a control command which corresponds to the user interaction from the storage and transmits to the display apparatus the read control command.
The user interaction may comprise at least one of a tap interaction regarding the body, a lay down interaction of laying the body down, a rotation interaction of rotating the body, and a separation interaction of separating the body from the support.
The body may comprise a support; and a main body configured to be attachable to/detachable from the support, and the controller may be configured to notify the display apparatus whether or not the main body and the support are attached to/detached from one another.
The body may be configured to have a guide groove on its bottom surface which guides a motion of the body.
The body may have a roly-poly shape.
According to an exemplary embodiment, there may be provided a method of controlling a remote control apparatus which controls a display apparatus, the control method comprising: sensing a motion of a body which has its center of mass in its lower portion and thus the lower portion is heavier than its upper portion and which can immediately stand up by itself; and transmitting to the display apparatus a signal which corresponds to a sensed result of the motion of the body and controlling operations of the display apparatus.
The body may comprise a support; and a main body configured to be attachable to/detachable from the support, and the controlling may be configured to comprise operating in a point mode of moving a pointer on a screen of the display apparatus according to a motion of the main body in response to the main body being separated from the support; and operating in a control mode of controlling operations of the display apparatus according to the motion of the body in response to the main body being mounted on the support.

The controlling may determine a user interaction according to the sensed result, and read a control command which corresponds to the user interaction from the storage and transmit the read control command to the display apparatus.

The user interaction may include at least one of a tap interaction regarding the body, a lay down interaction of laying the body down, a rotation interaction of rotating the body, and a separation interaction of separating the body from the support.

The body may comprise a support; and a main body maybe configured to be attachable to/detachable from the support, and the controlling may further comprise notifying the display apparatus whether or not the main body and the support are attached to/detached from one another.

The body may have a roly-poly shape.

According to an exemplary embodiment, there is provided a receiver which receives a signal which corresponds to a user interaction regarding a remote control apparatus which has its center of mass in its lower portion and thus the lower portion is heavier than its upper portion, and which can immediately stand up by itself; and a controller configured to perform a control operation corresponding to the signal, wherein the user interaction includes at least one of a tap interaction regarding the body down, a lay down interaction of laying the body, and a rotation interaction of rotating the body.

The display apparatus may further comprise a display, and the controller may be configured to move a pointer on a screen of the display apparatus according to a motion of the main body in response to the main body being separated from the support, and configured to perform the control operation according to the user interaction regarding the remote control apparatus in response to the main body combining with the support.

The remote control apparatus may have a roly-poly shape.

According to an exemplary embodiment, there is provided a method of controlling a display apparatus, the control method comprising receiving a signal which corresponds to a user interaction regarding a remote control apparatus which has its center of mass in its lower portion and thus the lower portion is heavier than its upper portion, and which can immediately stand up by itself; and performing a control operation which corresponds to the signal, wherein the user interaction includes at least one of a tap interaction regarding the body down, a lay down interaction of laying the body, and a rotation interaction of rotating the body.

The performing the control operation may move a pointer on a screen of the display apparatus according to a motion of the main body when the main body is separated from the support, and perform the control operation according to the user interaction in response to the main body combining with the support.

The remote control apparatus may have a roly-poly shape.

According to the aforementioned various exemplary embodiments, it is possible to provide a use sentiment based display apparatus and a remote control apparatus which controls the display apparatus.

BRIEF DESCRIPTION OF THE DRAWINGS

The above and/or other aspects of the exemplary embodiments will be more apparent by describing certain aspects of the exemplary embodiments with reference to the accompanying drawings, in which:

FIG. 1 is a view which illustrates a remote control apparatus and a display apparatus according to an exemplary embodiment;
FIG. 2 is a block diagram which illustrates a configuration of a remote control apparatus of FIG. 1;
FIG. 3 is a view which explains a method of sensing a motion of a remote control apparatus of FIG. 1;
FIGs. 4 to 6 are views which explain various control operations of a remote control apparatus of FIG. 1;
FIG. 7 is a view which illustrates a remote control apparatus according to various exemplary embodiments;
FIG. 8 is a view which illustrates a separating motion of a remote control apparatus of FIG. 7;
FIG. 9 is a view which explains a control motion of a remote control apparatus of FIG. 7;
FIG. 10 is a block diagram which illustrates a configuration of a remote control apparatus according to another exemplary embodiment;
FIG. 11 is a block diagram which illustrates a configuration of a display apparatus which is controlled by a remote control apparatus of FIG. 10;
FIG. 12 is a view which explains a comprehensive configuration of a remote control apparatus according to various exemplary embodiments;
FIGs. 13 and 14 are views which illustrate a remote control apparatus according to various exemplary embodiments;
FIG. 15 is a flowchart which explains a method of controlling a remote control apparatus according to an exemplary embodiment;

FIG. 16 is a flowchart which explains a method of controlling a display apparatus according to an exemplary embodiment; and

FIG. 17 is a flowchart which explains a method of controlling a remote control apparatus depending on whether or not the remote control apparatus is separated.

DETAILED DESCRIPTION

Certain exemplary embodiments are described in greater detail below with reference to the accompanying drawings.

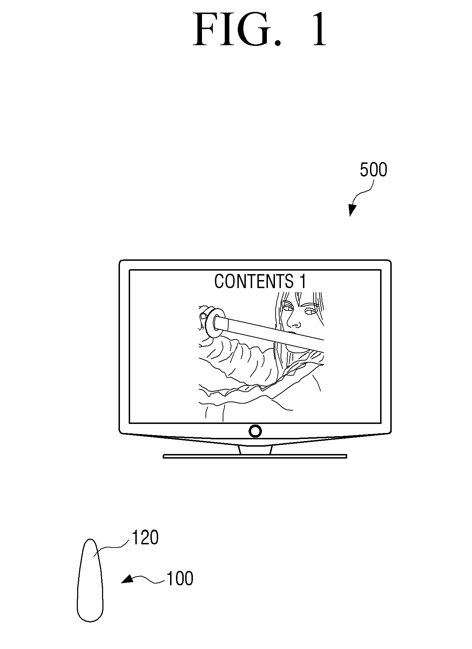

FIG. 1 is a view which illustrates a remote control apparatus and display apparatus according to an exemplary embodiment.

With reference to FIG. 1, the remote control apparatus 100 is configured to control the display apparatus 500. The remote control apparatus 100 may transceive commands and data, etc., via wireless networks which use various mobile communication standards such as Bluetooth®, Wifi® or 3G®, LTE® or Wimax,® etc. The remote control apparatus 100 may irradiate infrared light of a predetermined frequency to the display apparatus 500 and be configured to control the display apparatus 500.

The remote control apparatus 100 includes a body 120. The body 120 is formed to be a roly-poly shaped exterior of the remote control apparatus 100. A roly-poly shape means a shape where a center of mass is at the bottom portion and thus the bottom portion is heavier than the upper part, the bottom portion being round-shaped and thus, even when it is leaned or knocked down it quickly returns to the original position. The bottom portion of the body 120 is heavier than the bottom portion of the body 120. Furthermore, the body 120 may have a different shape having a roly-poly shape.

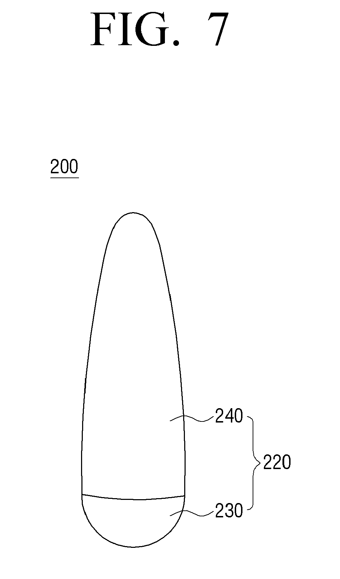

The body 120 may be either an integral type or a type which separates, but hereinbelow the explanation is based on an assumption that the body 120 is an integral type body 120. However, a case where the body 120 is a type which separates is explained in detail with reference to FIGs. 7 to 9.

The remote control apparatus 100, according to an exemplary embodiment, may obtain easy and amusing user operability when operating the remote control apparatus 100 through a roly-poly shaped body 120. Thus, the remote control apparatus 100 according to an exemplary embodiment may induce a user's sentiment and may enhance the user's emotional experience. The remote control apparatus 100 will be explained in further detail, in the figures below.

The display apparatus 500 may have infrared receiving means which may receive infrared ray irradiated from the remote control apparatus 100 or may have transmission means, such as a wireless communication chip which may receive a predetermined control command.

The display apparatus 500 may be one of various types of display apparatuses such as a television, computer, game, smart phone, etc. The display apparatus 500 may be an apparatus such as a projection module or a screen which projects light such as lasers on a projection surface. Hereinbelow is an explanation related to a case where the display apparatus 500 is implemented as a television.

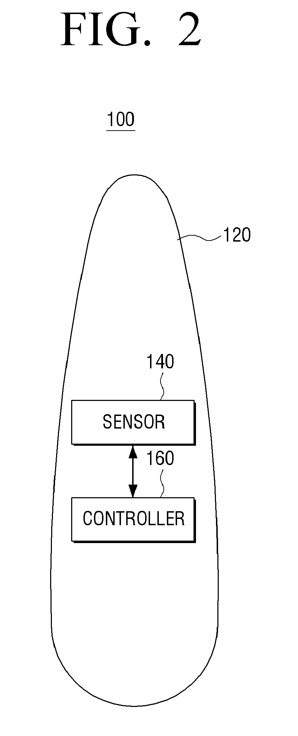

FIG. 2 is a block diagram which illustrates a configuration of a remote control apparatus.

With reference to FIG. 2, the remote control apparatus 100 includes a body 120, sensor 140, and controller 160.

As illustrated in FIG. 1, the body 120 has a roly-poly shape.

The sensor 140 is configured to have an element for sensing a motion of the body 120. The sensor 140 is mounted inside the body 120, and may sense a motion, rotation, etc. of the body 120. Shapes of motions and a sensing method thereof will be explained hereinbelow in detail, in the various exemplary embodiments.

The controller 160 may transmit to the display apparatus 500 a signal which corresponds to a result of the sensing of sensor 140. A signal being transmitted may include a result of sensing of the sensor 140. For example, in a case where the remote control apparatus 100 rotates 40 degrees in a clockwise or counterclockwise direction, the sensor senses such a motion, and the controller 160 transmits to the display apparatus 500 a signal which corresponds to the sensed result of the sensing.

The display apparatus 500 may determine a user interaction which corresponds to such a signal and operate according to a control command which corresponds to that user interaction. A user interaction means one of various operations according to the motion of the remote control apparatus 100. For example, a user interaction may be a tap interaction where the body 120 is moved slightly, a lay down interaction where the body 120 is laid on its bottom, a rotation interaction where the body is rotated, or a separation interaction where the body is separated in a case where the body is a type which separates. This is just an example, and thus a user interaction may be one of other more various interactions, in addition to the above, according to a particular motion of the body.

The display apparatus 500 may operate according to various control commands which match each of the user interactions. A control command may be one of various commands that may control the display apparatus such as changing the contents of the display apparatus, volume up or down of the display apparatus, execution or cancellation of an application, etc.

As aforementioned, a user may control operations of the display apparatus 500 with simple operations of the remote control apparatus 100, thereby improving the convenience of a user.

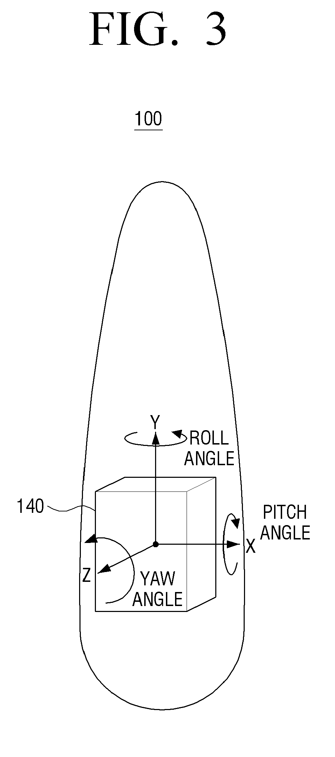

FIG. 3 is a view which explains a method of sensing a motion of the remote control apparatus of FIG. 1.

With reference to FIG. 3, the sensor 140 may be mounted inside the remote control apparatus 100, and may be configured to sense a motion of the remote control apparatus 100.

In response to the sensor 140 being provided inside the remote control apparatus 100, X, Y, Z axes that they meet at right angles are determined according to its arranged direction. A pitch angle refers to a rotation angle measured when rotated around Y axis, a roll angle refers to a rotation angle measured when rotated around X axis, and a yaw angle refers to a rotation angle measured when rotated around Z axis. The pitch angle and roll angle are measured by an acceleration sensor, and the yaw angle may be measured by a geomagnetic sensor or gyro sensor.

The acceleration sensor or geomagnetic sensor may consist of a 2-axis flux gate or 3-axis flux gate, but in order to produce a thin remote control apparatus, the acceleration sensor or geomagnetic sensor may consist of a 2-axis flux gate.

The controller 160 may be configured to calculate a pitch angle, roll angle, yaw angle, etc. based on an output value of the acceleration sensor and geomagnetic sensor, and may determine a user gesture based on that calculated result value.

The controller 160 is configured to perform a normalizing process of mapping an output value of an X axis and Y axis acceleration sensor to an output value of a predetermined range. In an example, a normalizing process may be made in accordance with the mathematical formula below.

$$Xt_{norm} = \frac{2Xt - (Xt_{max} + Xt_{min})}{Xt_{max} - Xt_{min}}$$

$$Yt_{norm} = \frac{2Yt - (Yt_{max} + Yt_{min})}{Yt_{max} - Yt_{min}}$$

In the mathematical formula 1, Xt is an output value of an X-axis acceleration sensor, Yt is an output value of an Y-axis acceleration sensor, $Xt_{norm}$ is a normalized output value of an X-axis acceleration sensor, and $Yt_{norm}$ is a normalized output value of a Y-axis acceleration sensor.

When a normalization is performed, the controller 160 uses the mathematical formula below to calculate a pitch angle($\theta$) and a roll angle($\varphi$).

$$\theta = \sin^{-1}(Xt_{norm})$$

$$\phi = \sin^{-1}\left(\frac{Yt_{norm}}{\cos\theta}\right)$$

In this mathematical formula, $Xt_{norm}$ is a normalized output value of an X-axis acceleration sensor, $Yt_{norm}$ is a normalized output value of a Y-axis acceleration sensor, $\theta$ is a pitch angle, and $\varphi$ is a roll angle.

The geomagnetic sensor may also be embodied into a structure similar to the structure of the acceleration sensor. The controller 160 uses the mathematical formula below to normalize the output value of the X-axis and Y-axis flux gate inside the geomagnetic sensor.

$$Xf_{norm} = \frac{(Xf - Xf_{bias})}{Xf_{sf}}$$

$$Yf_{norm} = \frac{(Yf - Yf_{bias})}{Yf_{sf}} * \alpha$$

$$Xf_{bias} = \frac{Xf_{max} + Xf_{min}}{2} \quad , \quad Xf_{sf} = \frac{Xf_{max} - Xf_{min}}{2}$$

$$Yf_{bias} = \frac{Yf_{max} + Yf_{min}}{2} \quad , \quad Yf_{sf} = \frac{Yf_{max} - Yf_{min}}{2}$$

In this mathematical formula, Xf and Yf indicate the actual output value of the X-axis geomagnetic sensor and Y-axis geomagnetic sensor, respectively; $Xf_{norm}$ and $Yf_{norm}$ indicate the X-axis and Y axis normalized value, respectively; $Xf_{max}$ and $Xf_{min}$ indicate the maximum value and minimum value of Xf, respectively; $Yf_{max}$ and $Yf_{min}$ indicate the maximum and minimum value of Yf, respectively; and $Yf_{max}$ and $Yf_{min}$ indicate the maximum value and minimum value of Yf, respectively. Although not disclosed in mathematical formula 3, an arbitrarily determined constant number may be additionally multiplied.

The controller 160 may be configured to calculate the direction in which the sensor 140 is placed, that is the azimuth, in a 3-dimensional space using the normalized value. The azimuth is a 3-dimensional space value expressed in three axes, and thus the output value of Z-axis which is vertical to the plane made of X-axis and Y-axis also needs an azimuth calculation process. However, when made of 2-axis fluxgate, Z-axis output value cannot be directly calculated, and thus must be calculated virtually. The controller 160 may calculate the virtual normalized Z-axis output value by substituting the normalized value of the X-axis and Y-axis output value, pitch value, roll value, and dip angle into the mathematical formula below.

$$Zf_{norm} = \frac{(Xf_{norm} * \sin\theta - Yf_{norm} * \cos\theta * \sin\phi + \sin\lambda)}{\cos\theta * \cos\phi}$$

In the above mathematical formula, Zf indicates the voltage value of Z-axis, $Zf_{norm}$ indicates the normalized voltage value of Z-axis, $\lambda$ indicates the dip angle, $\theta$ indicates the pitch angle, and $\phi$ indicates the roll angle.

In response to the normalized value of a virtual Z axis voltage value being calculated in the aforementioned method, it becomes possible to calculate the azimuth using the mathematical formula below.

$$\alpha = \tan^{-1}\left( \frac{Zf_{norm} * \sin\phi - Yf_{norm} * \cos\phi}{Xf_{norm} * \cos\theta + Yf_{norm} * \sin\theta * \sin\phi + Zf_{norm} * \sin\theta * \cos\phi} \right)$$

Herein, $\alpha$ indicates the azimuth, $Xf_{norm}$, $Yf_{norm}$, and $Zf_{norm}$ indicate the normalized output value of the X-axis, Y-axis and Z-axis flux gate, respectively, $\theta$ indicates the pitch angle, $\phi$ indicates the roll angle and $\lambda$ indicates the dip angle.

The controller 160 may be configured to compare the azimuth calculated using the geomagnetic sensor with the previously calculated azimuth to calculate the yaw angle. That is, in response to the previous azimuth being $\alpha$ and the present azimuth being $\alpha+30$, a determination can be made that rotation is made by 30 degrees in the clockwise direction. Furthermore, the controller 160 may determine how much the remote control apparatus 100 is inclined, in which direction, according to the changes of the pitch angle and roll angle calculated in the acceleration sensor.

For example, regarding the tap operation where the user hits the body, the controller 160 counts the time from the point when the motion is sensed by the sensor 140 until the point when the motion stops in order to determine whether or not acceleration has occurred. As such, the controller 60 may determine whether or not a flicking gesture has occurred based on the degree of change and the time of change of the yaw angle.

As such, the remote control apparatus 100 may rotate or move in various directions, and the controller 160 may be configured to sense that rotation or motion, and may transmit the sensed result to the display apparatus.

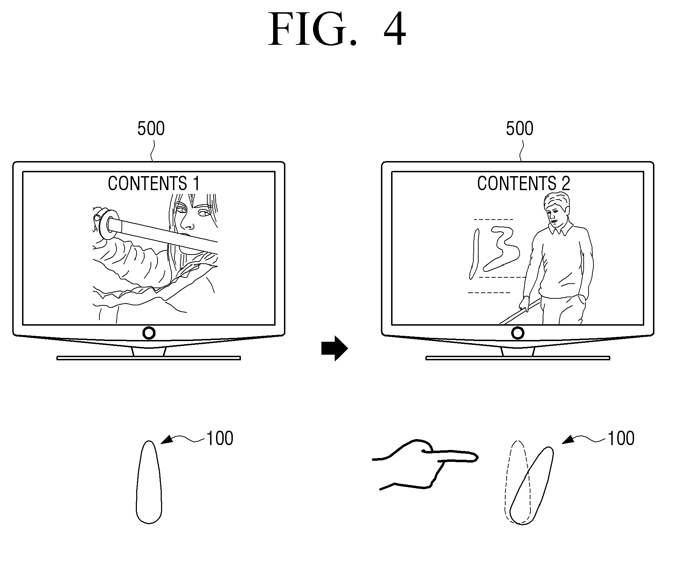

FIGs. 4 to 6 are views which explain various control operations of a remote control apparatus of FIG. 1.

With reference to FIG. 4, in response to the remote control apparatus 100 moving while the contents of the display apparatus 500 is replayed, the screen may be converted according to the user interaction. That is, as illustrated in FIG. 4, in response to a motion of flicking the remote control apparatus 100 being sensed while one contents replay screen (contents 1) being sensed, the controller of the remote control apparatus 100 may determine the tap interaction and transmits the sensed result to the display apparatus 500. The display apparatus 500 controls the operations of the display apparatus 500 according to the control command matching the tap interaction, and in an exemplary embodiment, the control command matching the tap interaction provides contents conversion. That is, having received the sensed result of the tap interaction from the remote control apparatus 100, the remote control apparatus 100 converts the sensed result of the tap interaction to another contents replay screen (contents 2).

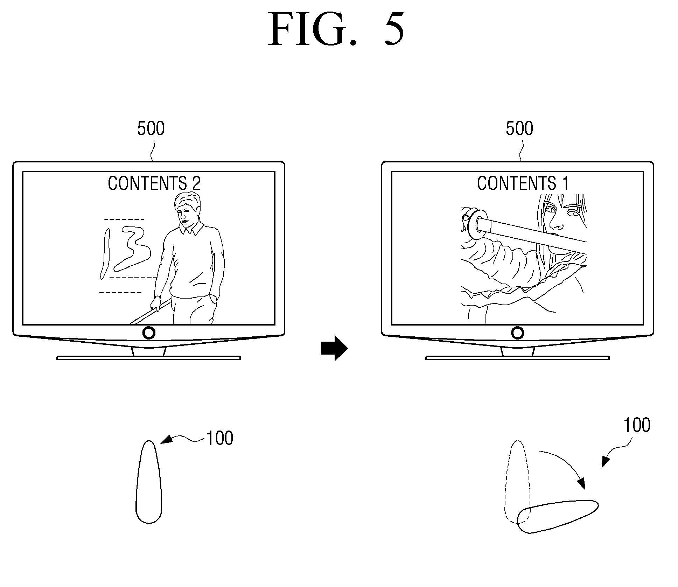

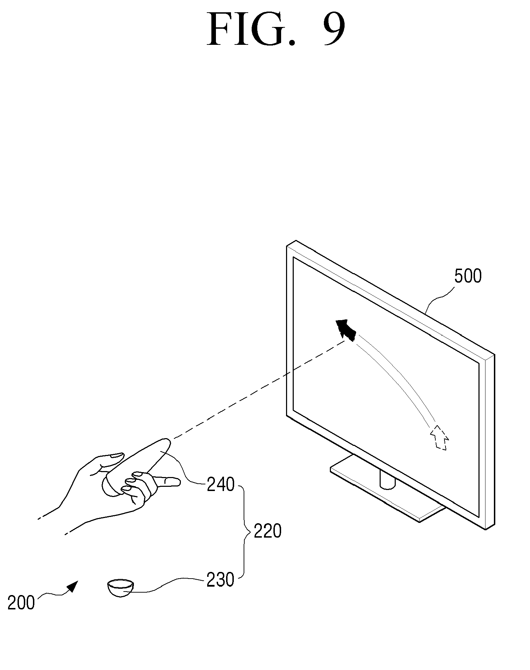

With reference to FIG. 5, in a case of intending to return to the original contents replay screen (contents 1) again, in response to a motion of laying down the remote control apparatus 100 being sensed while another contents replay screen (contents 2) is displayed as illustrated in FIG. 9, the controller of the remote control apparatus 100 determines the lay down interaction and transmits the sensed result to the display apparatus 500. The display apparatus 500 controls the operations of the display apparatus according to the control command matching the lay down interaction, and in an exemplary embodiment, the control command matching the lay down interaction is the conversion to the original contents. That is, having received the sensed result of the lay down interaction from the remote control apparatus, the display apparatus 500 converts the contents to the original contents replay screen (contents 1). Meanwhile, the contents may be one of various contents such as video contents, music contents, photograph contents, electronic book contents, etc.

Depending on the exemplary embodiments, the contents replay operation itself may be changed instead of the contents. That is, rewinding may be performed in the case of a tap interaction, while fast forward may be performed in the case of a lay down interaction.

Furthermore, depending on exemplary embodiments, a mode of explaining the method of using the remote control apparatus 100, that is a tutorial mode, may be performed. For example, in response to the controller of the remote control apparatus 100 transmitting the sensed result of the tap interaction or lay down interaction to the display apparatus, the display apparatus 500 may control the remote control apparatus 100 and display apparatus 500 according to the control command performing tutorial mode. In response to a tutorial mode being performed, the remote control apparatus 100 may embody various user interaction operations which match the predetermined control command. For example, in a case where the contents change is a tap interaction, and the original contents conversion is a lay down interaction, in response to a phrase such as contents change being displayed on the display apparatus 500, a tap interaction operation is performed in the remote control apparatus 100, and in response to a phrase such as original contents conversion being displayed on the display apparatus 500, a lay down interaction may be performed in the remote control apparatus 100. That is, the remote control apparatus 100 may be provided with a method of controlling the display apparatus 500, embodied through a user interaction through a particular user interaction.

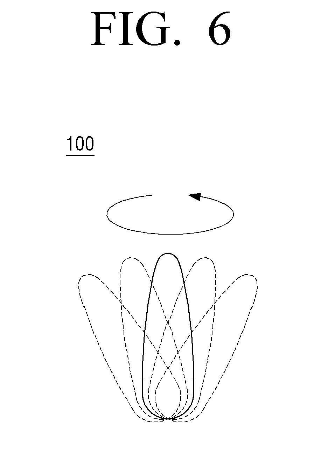

With reference to FIG. 6, the user interaction may further include a rotation interaction according to a rotation operation of the remote control apparatus 100, separate from the tap interaction or lay down interaction. As illustrated in FIG. 6, in response to a rotating motion of the remote control apparatus 100 being sensed, the controller of the remote control apparatus 100 determines the rotation interaction and transmits the sensed result to the display apparatus. The display apparatus controls the operations of the display apparatus according to the control command which matches the rotation interaction. Control commands matching the rotation interaction, the aforementioned tap interaction, or lay down interaction etc. may be various commands such as volume up or volume down, application execution or cancel, zoom in or zoom out, lock or unlock, etc. which are capable of controlling the display apparatus separate from the aforementioned contents conversion or tutorial model. To this end, the display apparatus may store various control commands matching various user interactions, and may read control commands matching such interactions in order to control the display apparatus.

FIG. 7 is a view which illustrates a remote control apparatus according another exemplary embodiment.

With reference to FIG. 7, the display apparatus 200 includes the body 220.

The body 220 includes the support 230 and main body 240, and is a type which separates and is not an integral type, as in the aforementioned exemplary embodiment.

The support 230 has a hemisphere shape, and forms a lower portion of the remote control apparatus 200. The bottom surface of the support 230 has a round shape so as to embody a roly-poly motion. The shape of the support 230 is just an example, and thus the body 220 may be embodied to have a roly-poly shape. The remote control apparatus 200 may be designed such that the center of mass is located in the support 230, in order to enable roly-poly motion.

The main body 240 has a long elliptic shape, and is formed to have a thickness that allows the main body 240 to be grasped by the user's hands. The shape of the main body 240 is also just an example, and thus, in response to the body 220 being embodied in a roly-poly shape, the body may be embodied as another shape as well. The main body 240 may be mounted on the support 230 so that the body can be attached to and detached from the support 230.

In response to the main body 240 being combined with the support 230, the remote control apparatus 200 may control the operations of the display apparatus according to the user interaction as explained in the aforementioned exemplary embodiments. In addition, in response to the main body 240 being separated from the support 230, the main body 240 may function as a pointer which may move the pointer displayed on the screen of the display apparatus.

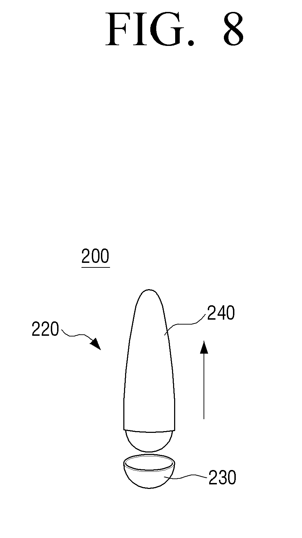

FIG. 8 is a view which illustrates a separating motion of the remote control apparatus of FIG. 7.

With reference to FIG. 8, in the body 220 of the remote control apparatus 200, the main body 240 is separated as it is moved upwards from the support 230. That is, the main body 240 is in position while inserted into the support 230 prior to separation and then comes out in the upper direction from the support 230 in response to the body being separated.

In the exemplary embodiment, the main body 240 is inserted and mounted to the support 230 in a detachable manner, but this is a mere example, and thus the main body 240 may be mounted in any other method as long as the main body 240 and the support 230 can be separated from each other.

In the remote control apparatus 200, the separating motion of the support 230 and the main body 240 may be the user interaction. For example, when a motion of the main body 240 being separated from the support 230 is sensed, the controller of the remote control apparatus 200 may be configured to determine the separation interaction and transmit the sensed result to the display apparatus. Next, the display apparatus may control the motions of the display apparatus according to the control commands matching the separation interaction.

FIG. 9 is a view which explains control operations of the remote control apparatus.

With reference to FIG. 9, in response to the main body 240 being separated from the support 230, the controller of the remote control apparatus 200 transmits information related to the motions of the main body 240 to the display apparatus 500 . Next, the display apparatus 500 may move the pointer on the screen of the display apparatus 500 according to the control command matching the information on the motions of the main body 240.

In a case where the remote control apparatus 200 includes a storage, to be explained hereinbelow, the controller may be configured to receive the control command matching the information on the motions of the main body 240 from the storage and directly transmit the information capable of directly moving the pointer on the screen to the display apparatus 500.

As such, the remote control apparatus 200 according to the present exemplary embodiment, the remote control apparatus 200 may be used as a pointer, thereby further increasing the ease and convenience of user manipulation, in response to the main body 240 being separated from the body 220.

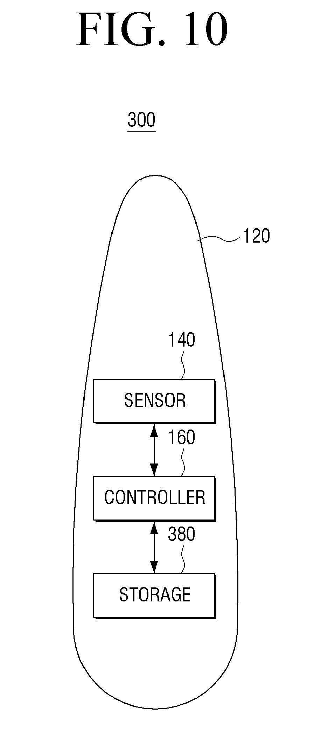

FIG. 10 is a block diagram which illustrates a configuration of a remote control apparatus according to another exemplary embodiment.

With reference to FIG. 10, the remote control apparatus 300 includes the body 120, sensor 140, controller 160, and storage 380.

Configurations and operations of the body 120, sensor 140 and controller 160 were explained with reference to FIG. 2, and thus repeated explanation is omitted.

In the storage 380, control information set differently by the state of motion is stored. The control information may include information such as applications, control commands, set data, transition platform, etc. Furthermore, in the storage 280, various data such as O/S(operating system) for driving the remote control apparatus, firmware, and applications, etc. may be stored. The storage 380 may further include a nonvolatile memory such as a flash memory, etc.

In response to a motion being sensed in the sensor 140, the controller 160 reads the control command matching the sensed motion from the storage 380. In addition, the display apparatus may be controlled according to the read control command. For example, in response to a user interaction being sensed by the sensor 140 of the controller 160, the execution screen portion displayed within the screen of the display apparatus may be changed according to that user interaction.

A user interaction may indicate various motions such as a tap motion of the user slightly hitting the body 120, a lay down motion of the user laying down the body 220, the user rotating the body 120, or the user separating the body 220 from the support 230, but is not limited thereto. In response to such a user interaction being sensed, the controller 160 scrolls the execution screen in the direction set to match that user interaction in order to change the portion shown on the visible area of the display apparatus. The execution screen change according to the user interaction is just an exemplary control motion, and thus the controller 160 may perform various control motions such as contents change, volume adjustment, and application execution etc., as aforementioned, in addition to the execution screen change.

The remote control apparatus 300 according to an exemplary embodiment has storage 380, and may transmit the control command matching that sensed result directly to the display apparatus and not the sensed result of the remote control apparatus 300. Accordingly, in the display apparatus according to an exemplary embodiment, an additional control command information matching the motion of the remote control apparatus 300 may not be further required.

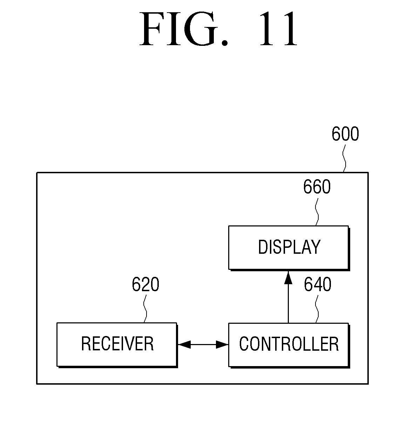

FIG. 11 is a block diagram which illustrates a configuration of a display apparatus controlled by the remote control apparatus of FIG. 10.

With reference to FIG. 11, the display apparatus 600 includes a receiver 620, controller 640 and display 660.

The receiver 620 is configured to receive from the remote control apparatus 300 the control command which matches the user interaction regarding the remote control apparatus 300. The receiver 620 may receive information related to attachment/detachment between the main body and support from the remote control apparatus, in the case where the remote control apparatus is a type which separates.

The controller 640 performs control operations which correspond to the control command. The controller 640 may execute various operations of the display apparatus based on the control command received from the receiver 620. For example, the controller 640 may execute screen change, zoom in or zoom out, service execution or cancellation, lock or unlock, etc., as explained in the aforementioned exemplary embodiments.

Meanwhile, the controller 640 may move the pointer on the screen of the display 660 according to the motion of the main body in response to the main body and the support being separated, in the case where the remote control apparatus is a type which separates.

The display 660 displays various screens. Specifically, the display 660 may display an image which corresponds to a broadcasting signal, and an image configuring various contents. In addition, on the screen of the display 660, various functions of the display apparatus according to various aforementioned user interactions are embodied.

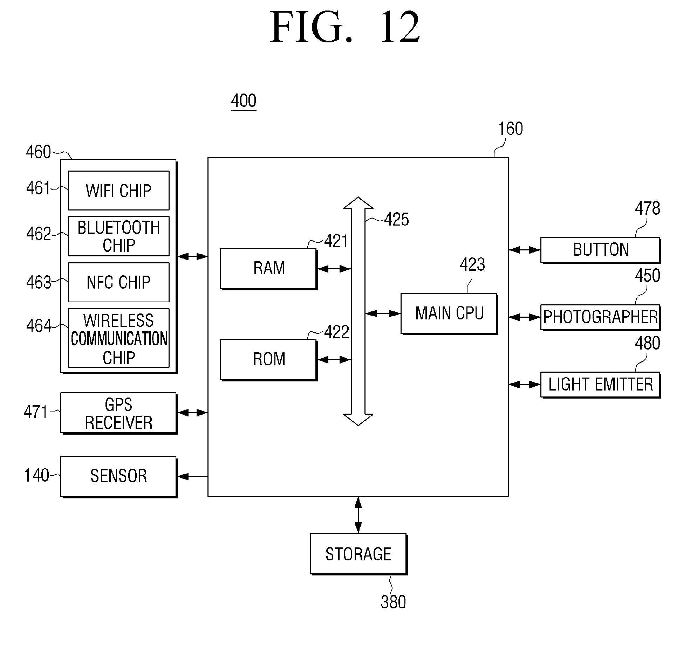

FIG. 12 is a view which explains a comprehensive configuration of the remote control apparatus according to various exemplary embodiments.

With reference to FIG. 12, the remote control apparatus 400 further includes a sensor 140, controller 160, and storage 380, in addition to the photographer 450, communicator 460, GPS receiver 471 and button 478, and light emitter 480.

The controller 160 may be configured to control overall operations of the remote control apparatus using the program stored in the storage 380. More specifically, the controller 160 may perform various control operations according to the determined result based on the motions of the remote control apparatus. Configurations and operations of the sensor 140, controller 160, and storage 380 were explained with reference to the aforementioned exemplary embodiments, and thus repeated explanation is omitted.

The photographer 450 photographs an image to determine whether or not a user has the remote control apparatus 400 and to determine the user's location, etc. The photographed image may be analyzed by the controller 160. The controller 160 may maintain the remote control apparatus in a lock state without any additional control operation, in response to a determination that there is no user.

The communicator 460 is a configuration for performing communication with various types of external devices according to various types of communication methods. The communicator 460 includes a Wi-Fi® chip 461, Bluetooth chip® 462, NFC® chip 463, and wireless communication chip 464. The Wifi chip 461, Bluetooth chip® 462, and NFC® chip 462 perform communication in the Wifi® method, Bluetooth® method, and NFC® method, respectively. The wireless communication chip 464 means a chip which performs communication according to various communication standards such as IEEE®, Zigbee®, 3G® (3rd Generation), 3GPP® (3rd Generation Partnership Project), and LTE® (Long Term Evolution), etc. The communicator 460 may have at least one chip from among the aforementioned various chips and chips according to other communication standards, and the communicator 460 may perform communication with external servers or other devices using the chip.

GPS receiver 471 is a configurative element which receives a GPS signal from a GPS (Global Positioning System) satellite and calculates the present location of the display apparatus. The controller 160 may perform navigation operations based on the location sensed by the GPS receiver 471 in response to a navigation program being executed.

The button 478 may be arranged in the exterior of the body. The controller 160 may transmit the control signal which corresponds to user manipulation input through the button 478 in order to control the operations of the display apparatus.

The controller 160 may boot the remote control apparatus 400 using the various programs and data stored in the storage 380, and may perform control operations according to the aforementioned various exemplary embodiments.

The controller 160 may include a RAM 421, ROM 422, main CPU 423, and BUS 425..

The RAM 421, ROM 422, and main CPU 423, etc. may be connected to one another through the BUS 425. In addition to the above, various interfaces may be further included, but illustration and explanation thereof, are omitted.

The main CPU 423 accesses the storage 380 and performs booting using the O/S stored in the storage 380. In the ROM 422, command sets for system booting etc. are stored. In response to a turn on command being input and power being supplied, the main CPU 423 copies the O/S stored in the storage 380 to the RAM 421 according to the command stored in the ROM 422 to boot the system. When the booting is completed, the main CPU 423 copies the various programs stored in the storage 380 to the RAM 421, and executes the programs copied in the RAM 421, performing various operations.

The light emitter 480 may have LED and OLED, etc., as light source, particularly so that various colors may be emitted in response to the remote control apparatus being operated. The light emitter provides feedback through light emission, thereby inducing attentions and easiness of interaction to the user.

In a case where the communicator 460 is included as in FIG. 12, the remote control apparatus 400 may interlock and drive with or share data with other remote control apparatuses, in addition to the display apparatus.

FIG. 12 is a comprehensive illustration of various configurative elements that may be mounted in a case where the remote control apparatus is embodied as an apparatus which provides various comprehensive functions such as communication functions and GPS receiving functions etc. Thus, according to an exemplary embodiment, some of the configurative elements illustrated in FIG. 12 may be omitted or changed, and other configurative elements may be further added. For example, the remote control apparatus may have further configurative elements to obtain user information through body signals or through environment sensing.

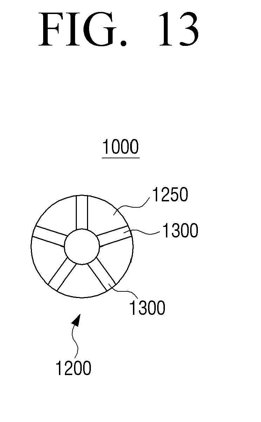

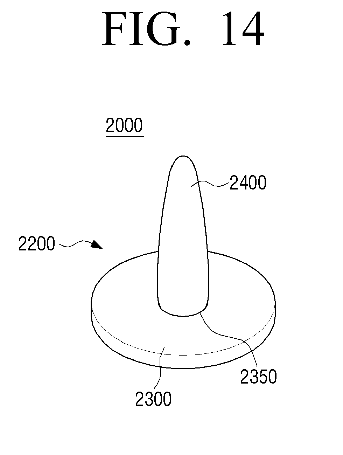

FIGs. 13 and 14 are views which illustrate a remote control apparatus according to various exemplary embodiments.

With reference to FIG. 13, the remote control apparatus 1000 includes a body 1200.

Configurations and operations of the body 1200 were explained with reference to FIG. 1, and thus repeated explanation is omitted.

On its bottom surface 1250, the body 1200 has a guide groove 1300 which guides motions of the body 1200. There is a plurality of guide grooves 1300, each of which is arranged to be distanced from one another by a predetermined distance.

The remote control apparatus 1000 according to an exemplary embodiment may prevent shaking or rotating of the body 1200 which interrupts the roly-poly motion during the roly-poly motion of the body through the guide groove 1300.

With reference to FIG. 14, the body 2200 of the remote control apparatus 2000 includes a support 2300 and main body 2400.

Configurations and operations of the support 2300 and main body 2400 were explained with reference to FIGs. 7 to 9, and thus repeated explanation is omitted.

The support 2300 has a shape of a disc, and an insertion groove 2350 where the main body 2400 is inserted in a detachable manner is formed on the upper surface. The insertion groove 2350 is designed to enable the roly-poly motion of the main body 2400 during insertion of the main body 2400. The remote control apparatus 2000 according to an exemplary embodiment has a disc shaped support 230, and thus may be stably supported on the bottom surface, but is not limited thereto.

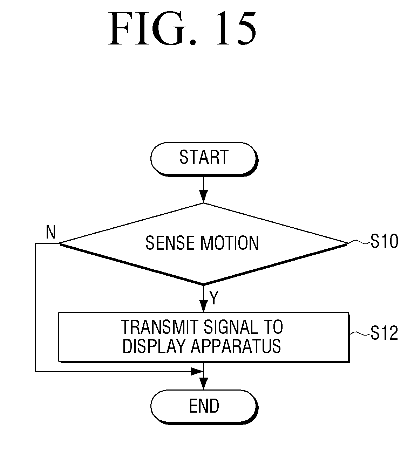

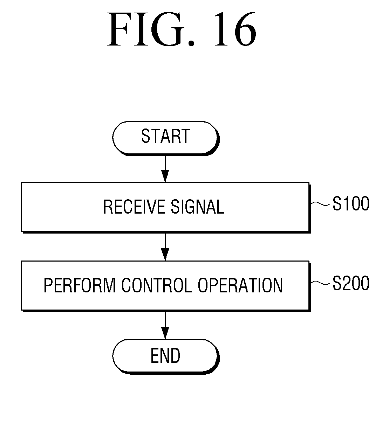

FIG. 15 is a flowchart which explains a method of controlling the remote control apparatus according to an exemplary embodiment, and FIG. 16 is a flowchart which explains a method of controlling the display apparatus according to an exemplary embodiment.

With reference to FIG. 15, in response to having sensed a motion of the remote control apparatus according to a user manipulation S10, the remote control apparatus transmits to the display apparatus S12 a signal which corresponds to the sensed result.

With reference to FIG. 16, the display apparatus receives a signal from the remote control apparatus S100, and performs a control operation which corresponds to the received signal S200.

The remote control apparatus may transmit to the display apparatus a control command which matches the sensed result and not a signal which corresponds to the sensed result, and the display apparatus then performs a control operation which corresponds thereto, according to the control command.

As such, since the display apparatus executes a control operation according to the motion of the remote control apparatus itself, it is possible to provide a user sentiment based display apparatus and a remote control apparatus which controls the display apparatus.

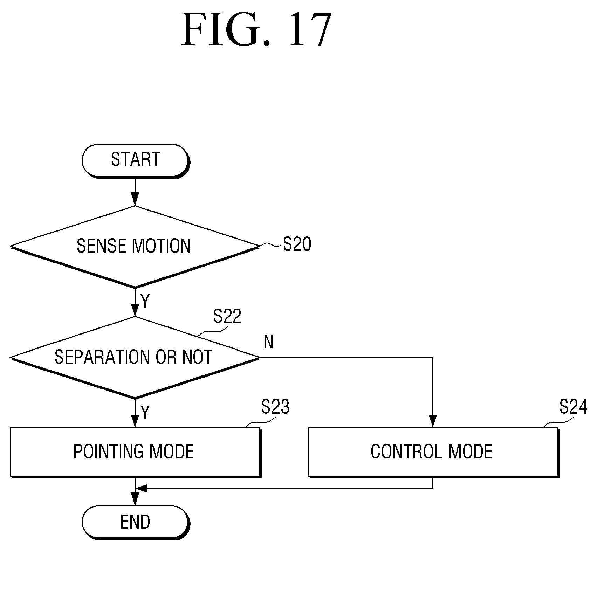

FIG. 17 is a flowchart which explains a control method depending on whether or not the remote control apparatus is separated, according to an exemplary embodiment.

With reference to FIG. 17, the remote control apparatus senses the motion according to the user manipulation S20. The remote control apparatus determines whether or not the remote control apparatus is separated, depending on the motion sensed result S22.

In response to a determination that the remote control apparatus is separated, the remote control apparatus operates in a pointing mode S23; whereas in response to the remote control apparatus not being separated, the remote control apparatus operates in a control mode S24.

Herein, the pointing mode refers to the remote control apparatus functioning as a pointer, as explained with reference to the aforementioned exemplary embodiments, and the control mode refers to executing control operations which correspond to the various user interactions through a roly-poly shaped body, as explained with reference to the aforementioned exemplary embodiments.

As such, it is possible to provide various user interactions and pointing interactions as a pointer according to the roly-poly shape remote control apparatus, depending on whether or not the remote control apparatus is separated.

Although a few exemplary embodiments have been shown and described, it would be appreciated by those skilled in the art that changes may be made in these exemplary embodiments without departing from the principles and spirit of the invention, the scope of which is defined in the claims and their equivalents.

**Claims**

1. A remote control apparatus controlling a display apparatus, the remote control apparatus comprising:

   a body which has its center of mass in its lower portion and thus the lower portion is heavier than its upper portion, and which can immediately stand up by itself;
   a sensor which senses a motion of the body; and
   a controller which transmits a signal corresponding to a sensed result of the sensor to the display apparatus, and controls operations of the display apparatus.

2. The remote control apparatus according to claim 1,
   wherein the body comprises:

   a support; and
   a main body attachable to/detachable from the support, and
   the controller operates in a pointing mode of moving a pointer on a screen of the display apparatus according to a motion of the main body when the main body is separated from the support, and controls operations of the display apparatus according to the motion of the body when the main body is mounted on the support.

3. The remote control apparatus according to claim 2,
   further comprising a storage where a control command is stored,
   wherein the controller determines a user interaction according to a sensed result of the sensor, and reads a control command from the storage corresponding to the user interaction and transmits to the display apparatus the read control command to the display apparatus.

4. The remote control apparatus according to claim 3,
   wherein the user interaction includes at least one of a tap interaction regarding the body, a lay down interaction of laying the body, a rotation interaction of rotating the body, and a separation interaction of separating the body from the support

5. The remote control apparatus according to claim 1,
   wherein the body comprises:

   a support; and
   a main body attachable to/detachable from the support, and
   the controller notifies the display apparatus whether or not the main body and the support are attached to/detached from one another.

6. The remote control apparatus according to claim 1,
   wherein the body has on its bottom surface a guide groove which guides a motion of the body.

7. The remote control apparatus according to claim 1,
   wherein the body has a roly-poly shape.

8. A control method of a remote control apparatus controlling a display apparatus, the control method comprising:

   sensing a motion of a body which has its mass center in its lower portion and thus the lower portion is heavier than its upper portion and which can immediately stand up by itself; and
   transmitting a signal corresponding to a sensed result of the motion of the body to the display apparatus and controlling operations of the display apparatus.

9. The control method according to claim 8,
   wherein the body comprises:

   a support; and
   a main body attachable to/detachable from the support, and

   the controlling comprises:

operating in a point mode of moving a pointer on a screen of the display apparatus according to a motion of the main body when the main body is separated from the support; and

operating in a control mode of controlling operations of the display apparatus according to the motion of the body when the main body is mounted on the support.

10. The control method according to claim 9,
wherein the controlling determines a user interaction according to the sensed result, and reads a control command corresponding to the user interaction from the storage and transmits the read control command to the display apparatus.

11. The control method according to claim 10,
wherein the user interaction includes at least one of a tap interaction regarding the body, a lay down interaction of laying the body down, a rotation interaction of rotating the body, and a separation interaction of separating the body from the support.

12. The control method according to claim 8,
wherein the body comprises:

a support; and
a main body attachable to/detachable from the support, and
and the controlling further comprises notifying the display apparatus whether or not the main body and the support are attached to/detached from one another.

13. The control method according to claim 8,
wherein the body has a roly-poly shape.

14. A display apparatus comprising:

a receiver which receives a signal corresponding to a user interaction regarding a remote control apparatus which has its center of mass in its lower portion and thus the lower portion is heavier than its upper portion, and which can immediately stand up by itself; and
a controller which performs a control operation corresponding to the signal,
wherein the user interaction includes at least one of a tap interaction regarding the body, a lay down interaction of laying the body down, and a rotation interaction of rotating the body.

15. The display apparatus according to claim 14,
further comprising a display,
wherein the controller moves a pointer on a screen of the display apparatus according to a motion of the main body when the main body is separated from the support, and performs the control operation according to the user interaction regarding the remote control apparatus when the main body combines with the support.

# FIG. 1

# FIG. 2

<u>100</u>

120

140

SENSOR

160

CONTROLLER

# FIG. 3

# FIG. 4

# FIG. 5

# FIG. 6

100

# FIG. 7

# FIG. 8

200

220

240

230

# FIG. 9

# FIG. 10

300

120

140

| SENSOR |

160

| CONTROLLER |

380

| STORAGE |

# FIG. 11

# FIG. 12

400

160

460

461 — WIFI CHIP

462 — BLUETOOTH CHIP

463 — NFC CHIP

464 — WIRELESS COMMUNICATION CHIP

471 — GPS RECEIVER

140 — SENSOR

421 — RAM

425

422 — ROM

423

MAIN CPU

478 — BUTTON

450 — PHOTOGRAPHER

480 — LIGHT EMITTER

STORAGE

380

# FIG. 13

# FIG. 14

2000

2400

2200

2350

2300

# FIG. 15

```
                    ┌─────────┐
                    │  START  │
                    └─────────┘
                         │
                         ▼
        N      ╱─────────────────────╲
      ┌───────◄      SENSE MOTION      ►───── S10
      │        ╲─────────────────────╱
      │                  │ Y
      │                  ▼
      │       ┌─────────────────────────┐
      │       │    TRANSMIT SIGNAL TO    │───── S12
      │       │    DISPLAY APPARATUS     │
      │       └─────────────────────────┘
      │                  │
      └──────────────────┤
                         ▼
                    ┌─────────┐
                    │   END   │
                    └─────────┘
```

# FIG. 16

```
        ┌─────────────┐
        │    START    │
        └──────┬──────┘
               │
               ▼
   ┌───────────────────────┐
   │     RECEIVE SIGNAL     │───S100
   └───────────┬───────────┘
               │
               ▼
   ┌───────────────────────┐
   │ PERFORM CONTROL OPERATION │───S200
   └───────────┬───────────┘
               │
               ▼
        ┌─────────────┐
        │     END     │
        └─────────────┘
```

# FIG. 17

```
           ┌──────────┐
           │  START   │
           └────┬─────┘
                │
                ▼
          ╱─────────────╲
        ╱                 ╲
       ╱   SENSE MOTION    ╲────── S20
        ╲                 ╱
          ╲─────────────╱
                │ Y
                ▼           S22
          ╱─────────────╲
        ╱                 ╲         N
       ╱ SEPARATION OR NOT ╲───────────────────────┐
        ╲                 ╱                         │
          ╲─────────────╱                           │
                │ Y         S23                      │      S24
                ▼                                    ▼
      ┌──────────────────┐              ┌──────────────────┐
      │   POINTING MODE  │              │   CONTROL MODE   │
      └────────┬─────────┘              └────────┬─────────┘
               │                                 │
               ▼◄────────────────────────────────┘
          ┌──────────┐
          │   END    │
          └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130032309